# EUROPÄISCHE PATENTSCHRIFT

(11) **EP 3 587 381 B1**
(45) Veröffentlichungstag und Bekanntmachung des Hinweises auf die Patenterteilung: **08.03.2023**
(21) Anmeldenummer: 18000566.2
(22) Anmeldetag: 28.06.2018
(51) Int. Cl.: C05F 17/00, C05F 3/00, C05F 11/08, C05F 11/00

(54) **VERFAHREN ZUR HERSTELLUNG VON BIOMASSEDÜNGER AUS GÜLLE VON IN DER LANDWIRTSCHAFT GEHALTENEN TIEREN, WIE RIND, SCHWEIN, SCHAF, HÜHNERN UND DERGLEICHEN**
METHOD FOR THE PREPARATION OF BIOMASS FERTILIZER FROM LIQUID MANURE FROM AGRICULTURAL ANIMALS, SUCH AS CATTLE, PIG, SHEEP, CHICKENS AND THE LIKE
PROCÉDÉ DE FABRICATION DE BIOMASSE ENGRAIS À PARTIR DE LISIER DES ANIMAUX DU SECTEUR AGRICOLE, TELS QUE BOVIN, PORC, MOUTON ET POULE PONDEUSE

(43) Veröffentlichungstag der Anmeldung: 01.01.2020
(73) Patentinhaber: STERCODE GmbH & Co KG, 4170 Haslach an der Mühl (AT)
(72) Erfinder: Gilhofer, Andree, 4170 Haslach (AT)
(74) Vertreter: Jell, Friedrich

(56) Entgegenhaltungen:
- EP-A1- 3 162 784
- WO-A1-80/02282

## Beschreibung

Verfahren zur Herstellung von Biomassedünger aus Gülle von in der Landwirtschaft gehaltenen Tieren, wie Rind, Schwein, Schaf, Hühnern und dergleichen.

Gülle ist eine Mischung aus flüssigen und festen Ausscheidungsprodukten (Kot-Harn-Gemisch) von Tieren, die in der Landwirtschaft gehalten werden. Die Gülle wird gesammelt und häufig zur Düngung von Wiesen und Äckern ausgebracht, wobei es regelmäßig zu Geruchsbelästigungen und Stickstoffemissionen in Form von Ammonium etc. kommt

Gülle ist ein Produkt, das nahezu ausschließlich bei Stallhaltung entsteht, in der Natur und insbesondere bei Weidehaltung entsteht keine Gülle, da Kot- und Harnausscheidungen hier nicht gemischt werden.

Güllen enthalten im Allgemeinen über 90% ihrer Masse an Wasser und sind Mehrphasensysteme. Sie enthalten Salze, organische Verbindungen, unverdaute und halbverdaute Nahrungsbestandteile, Verdauungsprodukte, Magensäfte und Zellmasse von im Magen-Darm-Trakt gewachsenen Mikroorganismen.

Die Geruchsbelästigung der Gülle bzw. der unangenehme Geruch kommen vor allem durch die Ausgasung von Ammoniak aus den flüssigen Anteilen der Gülle zustande.

Die flüssige Phase der Gülle enthält außerdem eine hohe Konzentration von K⁺-, PO₄³⁻ und NH₄⁺ - Ionen. Wird Gülle direkt ohne entsprechende Aufarbeitung direkt auf den Boden zur Düngung aufgebracht, wie dies in den meisten landwirtschaftlichen Betrieben noch der Fall ist, kommt es kurzfristig zu einem Überangebot an Ammonium- und K⁺ -Ionen im Boden. Dadurch wird nicht nur die Bodenqualität nachhaltig negativ bis zur fortschreitenden Bodenerosion beeinflusst, sondern auch die Frucht bzw. die Pflanzen der Äcker und Wiesen enthalten dann oft ein Überangebot an Kaliumionen im Grundfutter, weiters kommt es zu einem Verätzen von Blatträndern und Pflanzenwurzeln (wird als Verbrennen der Pflanze bezeichnet, die Ursache sind hohe Ammoniakkonzentrationen).

Der im Pflanzenfutter, wie Heu und Silage, durch Gülledüngung bedingte hohe K⁺-Ionen-Gehalt kann bei Tieren zu Probleme im Leber/Nieren-Stoffwechsel führen, insbesondere bei hoher Milchleistung.

Da landwirtschaftliche Güllen offensichtlich komplexe Gemische verschiedenster chemischer Substanzen und Mikroorganismen darstellen, finden in ihnen und in Wechselwirkung mit der umgebenden Gasatmosphäre bereits bei der Sammlung und Lagerung ständig chemische, physikalisch-chemische und biochemische Reaktionen statt, die sie in ihrer Zusammensetzung verändern.

Im Ganzen gesehen wirkt Gülledüngung auf dieselbe Weise wie leicht wasserlösliche Düngesalze, die chemisch hergestellt werden, und welche die Stabilität der Krümelstruktur zerstören und dadurch Wind- und Wassererosion, sowie Humusverlust und Nährstoffverlust auslösen.

Aus WO 88/02282 A ist ein Verfahren bekannt, bei dem Gülle mit einem Feststoffgehalt von 6 - 20% einer Behandlung mit einem Bakterium, nämlich Lactobacillus-Bakterien unterzogen wird.

Dazu wird die Gülle mit Wasser verdünnt das Gemisch von festem Kot und flüssigem Urin der Tiere behandelt.

WO2017/112605 A offenbart ein Verfahren zur Herstellung eines flüssigen Düngers beispielsweise aus tierischer Gülle, insbesondere von Geflügel.

Die Gülle wird dabei zuerst durch Zugabe von Flüssigkeit auf eine Konsistenz gebracht, dass sie fließfähig ist und der pH-Wert typischerweise auf 4 - 7 eingestellt, um in der Gülle vorhandenes Ammonium in nicht flüchtige Verbindungen umzuwandeln. Zur Ansäuerung können organische Säuren, aber auch anorganische Säuren oder Mischungen aus organischen oder anorganischen Säuren verwendet werden.

Dann wird die Temperatur des Güllegemisches erhöht um pathogene Stoffe abzutöten und das Wachstum von thermophilen Bakterien in der Gülle zu erhöhen (60 -80°C, 1. 4 h), dabei wird gemischt und zerkleinert. Es kann belüftet werden, um schlecht riechende Verbindungen, die sich während der Lagerung oder des Transports gebildet haben, zu entfernen. Dabei können die Abgase durch Biofiltration behandelt werden. Bei der anschließenden Trennung der Gülle in eine im Wesentlichen feste und eine im Wesentlichen flüssige Phase werden mit der festen Phase ein Großteil der Phosphor- und Kalziumverbindungen entfernt. Die im Wesentlichen feste Phase kann 40 - 65% Feuchtigkeit enthalten. Dann wird die Gülle vorerst in eine im Wesentlichen flüssige und eine im Wesentlichen feste Phase in Z.B. durch Zentrifugieren getrennt.

Die im Wesentlichen feste Phase wird getrocknet und als fester Dünger verwendet.

Die im Wesentlichen flüssige Phase kann 2 -15 % feste Bestandteile enthalten. US2016/0355444 offenbart die Aufarbeitung von Biomasse, u.a. Gülle durch Reaktionen in Anwesenheit von Übergangsmetallkatalysatoren.

CN 106336325 offenbart die Aufarbeitung von Gülle nach Zusatz von Stroh oder Bohnengewächsen, Fermentierung durch Maden, erhitzen auf 80 - 100°C für 2 - 4 Stunden, anschließender Einstellung des Feuchtigkeitsgehalts auf 30% - 50%, Zugabe von Humus, Eisensulfat, Zitronensäure oder Milchsäure und einem mikrobiellen Mittel und Fermentierung über 3 bis 10 Tage. EP3162784 A1 offenbart auch ein Verfahren zur Herstellung von Biomassedünger.

Aufgabe der Erfindung war es, ein Verfahren zur Aufarbeitung von landwirtschaftlicher Gülle bereitzustellen, bei dem die Mischung der Ausscheidungsprodukte der Tiere zu Biomassedünger verarbeitet wird, der pflanzenverträglich ist und keine Geruchsbelästigung darstellt Gegenstand der vorliegenden Erfindung ist daher ein mehrstufiges Verfahren zu Aufarbeitung von landwirtschaftlicher Gülle zur Erzeugung von Biomassedünger, gekennzeichnet durch folgende Verfahrensschritte:
a) Trennung des landwirtschaftlichen Güllegemisches durch mechanische Trennung wie Sieben (Gitterroste) oder Zentrifugieren von groben Fremdkörpern wie Stroh, von der im Wesentlichen flüssigen Phase oder Homogenisierung des Güllegemisches durch Zerkleinern von Stroh- und Heufasern
b) Zufügen von C-haltigen Stoffen, wie Mono - Di-, Oligo-, Polysacchariden, Brenztraubensäuren und Gluconodeltalacton und dergleichen zur flüssigen Phase bzw. dem homogenisierten Güllegemisch,
c) biogene semiaerobe Fermentierung ohne Zufuhr von Luft oder O₂ zur Absäuerung durch Zugabe von Bakterien bis zu einem pH-Wert von etwa 6,0- 5,8
d) aerobe Dissimilation und/oder Fermentierung und weitere Absäuerung bis zu einem pH-Wert von etwa 4,8 unter Zugabe von Schimmelpilzen und/oder Hefen und/oder Bakterien unter Luft- oder Sauerstoffzufuhr
wobei die in der im Wesentlichen flüssigen Phase der Gülle bzw. im homogenisierten Güllegemisch vorhandenen anorganischen Ionen insbesondere Ammoniumionen, Kaliumionen und Phosphationen durch die Schimmelpilze und/oder Hefen und/oder Bakterien in einer mikrobiologischen Reaktion verstoffwechselt und in den entstehenden organischen Stickstoffverbindungen, wie Aminosäuren, Oligopeptide, Peptide, Proteinen, Chitinen, Harnstoff und Phytin oder anderen organischen Verbindungen organisch gebunden bzw. eingelagert werden.

Das erfindungsgemäße Verfahren der biogenen semiaeroben Fermentierung und anschließenden aeroben Dissimilation und/oder Fermentierung kann in einem Reaktionsbehälter oder in mindestens zwei aufeinander folgenden Reaktionsbehältern durchgeführt werden.

Gegebenenfalls kann es zweckmäßig sein, die festen Bestandteile der Gülle, die aus festen und flüssigen Bestandteilen besteht, beispielsweise Stroh, Heu und dergleichen vor der Abtrennung der flüssigen Phase zu zerkleinern, beispielsweise durch bekannte Schneidvorrichtungen, Homogenisatoren, und/oder Rühr/Schneidwerke.

Die Trennung der Gülle in eine im Wesentlichen feste und eine im Wesentlichen flüssige Phase kann auf bekannte Weise durch Siebe, Gitterroste und/oder dergleichen erfolgen. Die Trennung kann aber auch durch Zentrifugieren des Güllegemisches erfolgen.

Die feste Phase kann, gegebenenfalls nach Trocknung, als Dünger direkt auf Wiesen, Äcker und Gemüsefelder aufgebracht werden.

Alternativ kann das Güllegemisch aber auch lediglich homogenisiert werden, durch Zerkleinerung der Stroh- und Heufasern, beispielsweise durch Rühr- und Schneidwerke.

Die im Wesentlichen flüssige Phase bzw. das homogenisierte Güllegemisch weist, wie bereits oben angeführt einen hohen Gehalt an Ammonium- und Kalium-Ionen aus.

Durch das Ausgasen der Gülle, insbesondere durch Ammoniak und Stickoxiden im Boden geht jedoch auch wertvoller Stickstoff für die Düngung verloren, im Allgemeinen bis zu zwei Drittel. Außerdem ist das Ausgasen der Ammonium-Ionen in Form von Ammoniak und Lachgas (klimarelevante Gase) im Boden hauptverantwortlich für die Geruchsbelästigung bei der Ausbringung von Gülle auf Wiesen und Felder zur Düngung.

Zudem sind die in der flüssigen Phase der Gülle bzw. im homogenisierten Güllegemisch in Form von Ionen vorliegenden Pflanzennährstoffe (wie K⁺, NH₄⁺ und PO₄⁺) nur bedingt geeignet zur Bodenverbesserung, da die Ionen die Krümelstrukturen des Bodens zerstören, wodurch die Mikroerosion des Bodens ausgelöst wird, welche sich in sichtbarer Form durch Wind/Wassererosion zeigt, sowie zu Humusabbau und Ausschwemmen von Pflanzennährstoffen führt.

Üblicherweise weisen landwirtschaftliche Güllen bzw. Güllegemische in der im Wesentlichen flüssigen Phase einen pH-Wert von etwa 6,5 - bis 8 auf. Dieser pH-Wert der Gülle ist nicht unwesentlich abhängig von der Art der Fütterung der Tiere. Bei eiweißreicher oder zu eiweißreicher Fütterung liegt der pH-Wert im basischen Bereich also um Bereich > 7 bis 8, fallweise sogar darüber.

Es wurden fallweise auch schon pH-Werte von 9 bis 11 in Güllen gemessen.

Die im Wesentlichen flüssige Phase der Gülle bzw. das homogenisierte Güllegemisch wird mit C-haltigen Stoffen, wie Mono - Di-, Oligo-. Polysacchariden, Brenztraubensäuren und Gluconodeltalacton und dergleichen versetzt. Beispiele für derartige Stoffe, die diese C-haltigen Verbindungen enthalten, sind etwa Rübenmelasse, Getreidemehle, Zuckerrohrmelasse und dergleichen. Weiters können auch Aminosäuren, Peptide, Oligopeptide und Eiweiße, sowie Fette zugefügt werden. Alle diese Stoffe dienen als Nährquelle für die Bakterien, Schimmelpilze und Hefen.

Dies kann zweckmäßigerweise auch in einem Vormischbehälter erfolgen, es ist aber auch möglich diesen Verfahrensschritt in einem Reaktionsbehälter durchzuführen.

Die C-haltigen Stoffe bilden in gelöster Form die Lebensbasis für die Absäuerung der Gülle mit Hilfe von Bakterien, insbesondere Lactobacillus-Arten, oder anderen Mikroorganismen, die im nächsten Schritt der flüssigen Gülle bzw. dem homogenisierten Güllegemisch zugefügt werden.

In diesem Schritt erfolgt nun die Absäuerung der Gülle von einem Ausgangswert > 6,5 auf einen PH-Wert von etwa 6,0 bis 5,8 unter semiaeroben Bedingungen. Es wird in diesem Verfahrensschritt keine Luft oder O₂ zugeführt, da ansonsten die Ausgasung von Ammoniak begünstigt wird, da die Ureasen bei Sauerstoffzufuhr aktiv reagieren.

Die Umsetzung der im Wesentlichen flüssigen Phase der Gülle oder des homogenisierten Güllegemischs mit Bakterien oder anderen Mikrooben, beispielsweise Lactobacillus-Bakterien erfolgt erfindungsgemäß bei einer Temperatur von etwa 15 bis 25°C, vorzugsweise 18 bis 22°C.

Dabei werden vorerst die Ureasen gehemmt, bzw. ganz blockiert, die für das Ausgasen der in der flüssigen Phase der Gülle bzw. des homogenisierten Güllegemischs vorhandenen Ammoniakverbindungen verantwortlich sind. Ureasen wandeln Stickstoffverbindungen, wie Harnstoff in Ammoniak um, der ausgast. Wird Ammoniak in Wasser gelöst, entstehen Ammoniumionen und Hydroxidionen, die Ammoniumionen können im Boden wieder zu Ammoniak umgewandelt werden, insbesondere auf alkalischen Böden. Dadurch entsteht einerseits die Geruchsbelästigung beim Ausbringen der Gülle durch Ausgasen des Ammoniaks, andererseits geht wertvoller Stickstoff für die Düngung des Bodens verloren, da die Stickstoffverbindungen nicht zur Gänze von der Pflanze aufgenommen werden können und dann als Nitrat oder Nitrit (Denitrifizierung) ausgewaschen werden. Ein Teil der Ammoniumionen kann auch an den Ton/Humuskomplex angelagert werden oder von den Pflanzenwurzeln aufgenommen werden. Durch die erfindungsgemäße Absäuerung werden die Ureasen gehemmt, wodurch die Umwandlung des Harnstoffs und die Ammoniakbildung verhindert wird.

In einem weiteren Schritt erfolgt zweckmäßigerweise in einem zweiten Reaktionsbehälter die Zugabe von Schimmelpilzen und/oder Hefen und/oder Bakterien. Diese biochemische Reaktion erfolgt unter Zufuhr von Luft oder Sauerstoff unter aeroben Bedingungen bei einer Temperatur von etwa 15 bis 25°C, vorzugsweise 18 - 22°C.

Es ist aber auch möglich, diesen Schritt im selben Reaktionsbehälter, wie die Absäuerung durch Bakterien, wie Lactobacillus-Arten durchzuführen, wobei dann zweckmäßigerweise zur kontinuierlichen Durchführung des Verfahrens die Luft- oder Sauerstoffzufuhr nur im oberen Bereich des Behälters erfolgt, während im unteren Bereich des Behälters die Absäuerung bzw. Fermentation fortschreitet.

Dabei werden insbesondere Kalium- und Ammoniumionen, sowie Phosphationen durch die Schimmelpilze, Hefen und/oder Bakterien unter Bildung von Biomasse verstoffwechselt bzw. in den Zellen eingelagert. Es bildet sich mikrobielle Biomasse.

Geeignete Schimmelpilze sind jene der Gattungen Aspergillus, Penicillium, Mucor und Trichoderma und dergleichen.

Geeignete Hefen sind Wildhefen, die aus der Milchsäurebiologie oder aus Pflanzen, Kräutern und Kräutermischungen gewonnen werden können, sowie Erdhefen aus unterschiedlichsten Bodentypen und Bodenarten, wie Waldboden, Wiesenboden, Ackerboden, oder aus Festmist bzw. Gülle und dergleichen.

Geeignete Bakterien sind beispielsweise Bakterienstämme, die in den Böden und auf Gesteinsoberflächen vorkommen, Kalibakterien und/oder Phosphorbakterien oder Escherichia-Bakterien (ausgenommen pathogene Escherichia Bakterien, wie E. choli) und dergleichen.

Je nach Zusammensetzung der im Wesentlichen flüssigen Phase der Gülle bzw. des homogenisierten Güllegemischs können die Schimmelpilze, Hefen und Bakterien einzeln oder in Kombination eingesetzt werden.

Es können auch Mischungen unterschiedlicher Schimmelpilze, Hefen und Bakterien eingesetzt werden.

Die mikrobiologische Reaktion verläuft im Gesamten endergon und wird durch die Schimmelpilze und/oder Hefen und/oder Bakterien in Gang gebracht, wobei die im Wesentlichen flüssige Phase der Gülle bzw. das homogenisierte Güllegemisch, die/das mit C-haltigen Verbindungen und/oder Peptiden Oligopeptiden, Aminosäuren, Eiweißen, Fetten versetzt wurde, als Nährlösung für die mikrobiologische Reaktion dient.

Vorteilhafterweise läuft die mikrobiologische Reaktion bei Temperaturen von 15 bis 25°C, vorzugsweise 18 bis 22°C ab.

Bei geringerer Temperatur sinkt die Reaktionsgeschwindigkeit, bei höherer Temperatur kann die Reaktion gehemmt werden.

Gegebenenfalls können durch metabolische Prozesse Teilreaktionen auch exergon ablaufen. Die Gesamtreaktion verläuft aber endergon.

Die Schimmelpilze und/oder Hefen und/oder Bakterien bewirken in einer mikrobiologischen Reaktion die Überführung von Ammonium- und Kaliumionen in eine organische gebundene Form oder die Einlagerung in Zellen oder Einzeller, die sowohl boden- als auch pflanzenverträglich ist. Es werden also die in Form von Ionen vorliegenden Nährstoffe (ionare Strukturen) in organische Verbindungen übergeführt bzw. in Zellen oder Einzeller eingelagert.

Im Wesentlichen werden durch die mikrobiologische Reaktion organische Stickstoffverbindungen, wie Aminosäuren, Oligopeptide, Peptide, Proteine, Chitin, Harnstoff, Phytin und dergleichen gebildet.

Die Nährstoffe in den organischen N-Verbindungen der nun auf diese Weise erzeugten Biomasse werden direkt in verwertbarer Form auf bzw. in den Boden eingebracht.

Die organischen N-Verbindungen bzw. die mikrobiell gebildete Biomasse verhindern ein rasches Ausgasen in Form von NH₃ und Stickoxiden, wie z.B. Lachgas, da die organischen Verbindungen bzw. die mikrobielle Biomasse durch die Bodenbiologie zu Nährhumus und Dauerhumus umgebaut wird. Die Nährstoffe (K- NH4 und Phosphationen) finden sich im Nährhumus wieder, die güllebedingte Denitrifikation des Bodens wird dadurch verhindert, es wird eine nachhaltige Bewirtschaftung des Bodens ermöglicht.

Auch die Geruchsbelästigung wird stark vermindert und sogar nahezu gänzlich vermieden.

Das erfindungsgemäße Verfahren kann kontinuierlich oder diskontinuierlich durchgeführt werden.

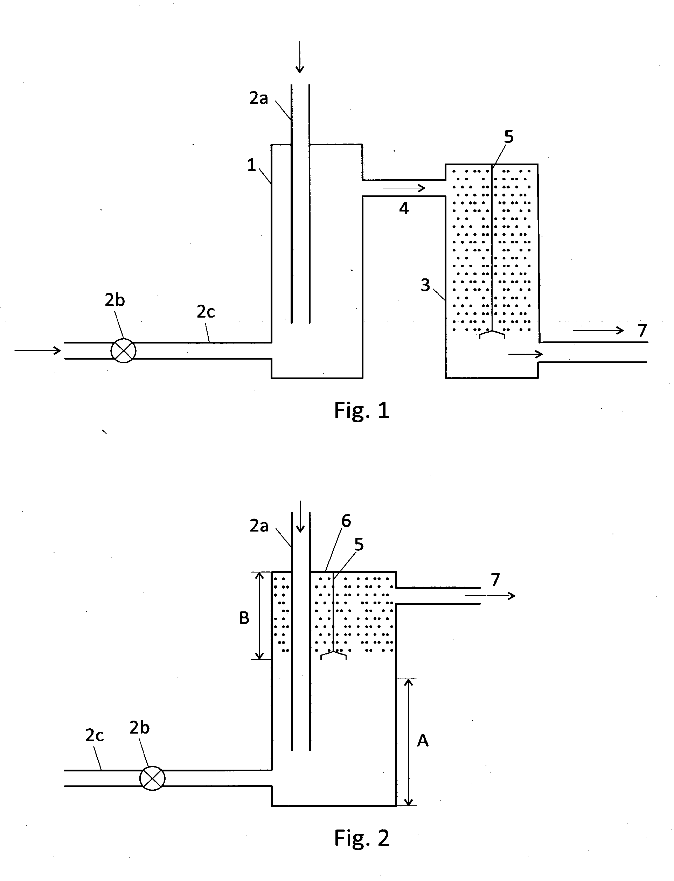

In den Figuren 1 und 2 ist das erfindungsgemäße Verfahren schematisch dargestellt.

Figur 1 zeigt dabei eine erste Verfahrensvariante, die in zwei getrennten Reaktionsbehältern durchgeführt wird.

Die Trennung der Gülle in eine im Wesentlichen feste und eine im Wesentlichen flüssige Phase ist nicht dargestellt. Bei einer Trennung des Güllegemischs können die festen Bestandteile des Güllegemisches vorerst zerkleinert werden, um insbesondere das darin vorhandene Stroh und Heu in kleine Teile zu zerlegen. Dies kann beispielsweise durch Häckseln, durch Schneidwerke, und dergleichen erfolgen. Anschließend wird das Gemisch beispielsweise durch Sieben oder Zentrifugieren in eine im Wesentliche feste und eine im Wesentlichen flüssige Phase getrennt.

Diese Trennung der Gülle in eine im Wesentlichen feste und eine im Wesentlichen flüssige Phase ist aber auch nicht nötig, wenn die Gülle, wie beschrieben als homogenisiertes Güllegemisch eingesetzt wird. Dazu werden die im Güllegemisch vorhandenen Stroh- und Heufasern zerkleinert und das Gemisch homogenisiert, beispielsweise durch Rühr- und Schneidwerke.

In den ersten Fermentationsbehälter 1 wird die im Wesentlichen flüssige Phase der Gülle bzw. das homogenisierte Güllegemisch zugeführt und die Temperatur auf etwa 15 - 25°C eingestellt. Dies kann durch bekannte Heizvorrichtungen, wie Wandheizung, Wärmeschlangen, über Wärmetauscher und dergleichen erfolgen.

Die Zuführung der Gülle kann dabei von oben über ein Fallrohr 2a oder alternativ über eine Pumpe 2b und eine Zuführung 2c im unteren Drittel des Reaktionsbehälters erfolgen.

Der Gülle werden nun erfindungsgemäß C-haltige Stoffe, wie beispielsweise Mono - Di-, Oligo-, Polysaccharide, Brenztraubensäure und Gluconodeltalacton und dergleichen, beispielsweise in Form von Rübenmelasse, Getreidemehlen, Zuckerrohrmelasse und dergleichen versetzt. Weiters können auch Aminosäuren, Peptide, Oligopeptide, Polypeptide oder Eiweiße, sowie Fette zugesetzt werden.

Alternativ kann der Zusatz dieser Stoffe auch in einem Vormischbehälter erfolgen und das Gemisch erst nachfolgend in den ersten Fermentationsbehälter eingebracht werden.

Im ersten Fermentationsbehälter erfolgt nun ggf. unter gelegentlichem Rühren die biogene semiaerobe Fermentation zur Absäuerung ohne Luft- oder Sauerstoffzufuhr durch Zugabe von Bakterien, beispielsweise Lactobacillus Arten bis zu einem pH-Wert von etwa 6,0- 5,8. Ist der pH-Wert der Gülle bei etwa 6,0 angelangt, erfolgt kein Ausgasen von Ammoniak mehr, die Ureasen sind zur Gänze inhibiert.

Anschließend wird die Mischung in einen zweiten Reaktionsbehälter 3 mittels einer Zuführung 4 übergeführt. Die Temperatur wird hier bei 15 bis 25°C gehalten. Hier erfolgt die aerobe Dissimilation und/oder Fermentierung und weitere Absäuerung unter Zugabe von Schimmelpilzen und/oder Hefen und/oder Bakterien unter Luft- oder Sauerstoffzufuhr bis zu einem pH-Wert von etwa 5,8 bis 4,8. Dazu wird vorzugsweise ein belüftetes Rührwerk 5 verwendet. Anschließend kann die so behandelte Gülle über eine Ableitung 7 entnommen, gelagert oder direkt zur Düngung verwendet werden.

Die Zuführung und Entnahme der Gülle kann kontinuierlich erfolgen.

Das Verfahren kann aber auch diskontinuierlich unter chargenweiser Zuführung und Entnahme erfolgen.

Figur 2 zeigt eine zweite Verfahrensvariante, bei der die Verfahrensschritte der semiaeroben Fermentation und biogenen aeroben Dissimilation und/oder Fermentierung in einem einzigen Reaktionsbehälter 6 durchgeführt wird.

Die Zuführung der Gülle kann dabei wie in der ersten Verfahrensvariante von oben über ein Fallrohr 2a oder über eine Zuführung 2c im unterem Bereich des Reaktionsbehälters über eine Pumpe 2b erfolgen. Vorteilhafterweise erfolgt die Zuführung eines Gemisches aus der im Wesentlichen flüssigen Phase der Gülle bzw. dem homogenisierten Güllegemisch mit Rübenmelasse, Getreidemehlen, Zuckerrohrmelasse und/oder dergleichen. Die Temperatur im Behälter wird auf etwa 15 - 25°C eingestellt.

Im Bereich A, also im unteren Drittel bis zur unteren Hälfte des Reaktionsbehälters erfolgt nun, wie oben beschrieben, die biogene semiaerobe Fermentation und Absäuerung ohne Luft- oder Sauerstoffzufuhr durch Zugabe von Bakterien, wie beispielsweise Lactobacillus Arten bis zu einem pH-Wert von etwa 6,0- 5,8. Durch ständig nachlaufende im Wesentlichen flüssige Gülle bzw. des homogenisierten Güllegemischs steigt die im unteren Bereich A unter Zugabe von Bakterien auf einen pH-Wert von 6,0 bis 5,8 abgesäuerte Gülle in den Bereich B. Etwa im oberen Fünftel des Behälters ist ein belüftetes Rührwerk situiert, etwa im oberen Drittel des Behälters findet die aerobe Dissimilation und/oder Fermentierung unter Luftzufuhr statt. Die behandelte Gülle wird über eine Ableitung 7 entnommen.

Die in der unbehandelten Gülle vorhandenen freien Kalium- und Ammoniumionen sind nach Durchführung des erfindungsgemäßen Verfahrens zu über 90% in die mikrobielle Biomasse eingebaut.

Der Gesamtstickstoffgehalt der unbehandelten, aber auch der nach diesem Verfahren behandelten Gülle setzt sich zusammen aus dem Gehalt an organisch gebundenen Stickstoff und dem Gehalt an NH₄⁺ Ionen.

Nach Durchführung des erfindungsgemäßen Verfahrens geht der Gehalt an organisch gebundenem Stickstoff gegen Maximum, der Gehalt an NH₄⁺ Ionen gegen Minimum. Der Gesamtstickstoffgehalt bleibt jedoch im Wesentlichen gleich.

Der Gehalt an Kaliumionen nach erfindungsgemäßer Behandlung beträgt etwa <100g/m³, der Gehalt an Ammoniumionen <100 g/m³.

Ferner erfolgt eine Reduktion der in der Ausgangsgülle vorhandenen Enterokokken und Enterobacteriaceen (Fäkalbiologie) um mindestens 10²/ml.

Diese Güllehygienisierung erfolgt wesentlich in der Phase der aeroben Dissimilation und/oder Fermentierung.

Dadurch ist die erfindungsgemäß behandelte Gülle weitgehend geruchlos, da in der ersten Stufe der semiaeroben Fermentation das Ausgasen des Ammoniaks unterbunden wird und in der Stufe der aeroben Dissimilation und/oder Fermentierung der Fäkalgeruch beseitigt wird.

Nährhumus und Dauerhumus gewährleisten zudem die optimale natürliche Ernährung der auf einem derart behandelten Boden wachsenden Pflanzen.

Durch den Einbau und die Umwandlung der freien Ammonium-Ionen in die organisch gebundene Form kann Ammoniak nicht mehr ausgasen, die Geruchsbelästigung sinkt, der Verlust an wertvollem Stickstoff für die Düngung wird minimiert und steht für die Nährhumus- und Dauerhumus-bildenden Reaktionen und Prozesse im Boden zur Verfügung. Dadurch wird eine nachhaltige Bewirtschaftung der Böden ermöglicht.

## Patentansprüche

1. Mehrstufiges Verfahren zu Aufarbeitung von landwirtschaftlicher Gülle zur Erzeugung von Biomassedünger, **gekennzeichnet durch** folgende Verfahrensschritte:
a) Trennung des landwirtschaftlichen Güllegemisches durch mechanische Trennung wie Sieben (Gitterroste) oder Zentrifugieren von groben Fremdkörpern wie Stroh, von der im Wesentlichen flüssigen Phase oder Homogenisierung des Güllegemisches durch Zerkleinern von Stroh- und Heufasern
b) Zufügen von C-haltigen Stoffen, wie Mono - Di-, Oligo-, Polysacchariden, Brenztraubensäuren und Gluconodeltalacton und dergleichen zur flüssigen Phase bzw. dem homogenisierten Güllegemisch,
c) biogene semiaerobe Fermentierung ohne Zufuhr von Luft oder O₂ zur Absäuerung durch Zugabe von Bakterien bis zu einem pH-Wert von etwa 6,0-5,8
d) aerobe Dissimilation und/oder Fermentierung und weitere Absäuerung bis zu einem pH-Wert von etwa 4,8 unter Zugabe von Schimmelpilzen und/oder Hefen und/oder Bakterien unter Luft- oder Sauerstoffzufuhr
wobei die in der im Wesentlichen flüssigen Phase der Gülle bzw. im homogenisierten Güllegemisch vorhandenen anorganischen Ionen insbesondere Ammoniumionen, Kaliumionen und Phosphationen durch die Schimmelpilze und/oder Hefen und/oder Bakterien in einer mikrobiologischen Reaktion verstoffwechselt und in den entstehenden organischen Stickstoffverbindungen, wie Aminosäuren, Oligopeptide, Peptide, Proteinen, Chitinen, Harnstoff und Phytin oder anderen organischen Verbindungen organisch gebunden bzw. eingelagert werden.

2. Verfahren nach Anspruch 1, **dadurch gekennzeichnet, dass** die semiaerobe Absäuerung bei einer Temperatur von 15 bis 25 °C erfolgt.

3. Verfahren nach einem der Ansprüche1 oder 2, **dadurch gekennzeichnet, dass** die aerobe Dissimilation und/oder Fermentierung bei einer Temperatur von 15 bis 25 °C erfolgt.

4. Verfahren nach einem der Ansprüche 1 bis 3, **dadurch gekennzeichnet, dass** Schimmelpilze der Gattungen Aspergillus, Penicillium, Trichoderma oder Mucor und dergleichen eingesetzt werden.

5. Verfahren nach einem der Ansprüche 1 bis 4, **dadurch gekennzeichnet, dass** als Hefen Wildhefen aus der Milchsäurebiologie oder aus Kräutermischungen aus dem Erdmaterial unterschiedlicher Bodentypen und Bodenarten (Waldboden, Wiese, Weide) oder Festmist oder Gülle eingesetzt werden.

6. Verfahren nach einem der Ansprüche 1 bis 5, **dadurch gekennzeichnet, dass** als Bakterien Bakterienstämme, die in den Böden auf Gesteinsoberflächen vorkommen, insbesondere Kalibakterien oder Phosphorbakterien, oder Eschericha-Bakterien mit Ausnahme der pathogenen Eschericha-Bakterien eingesetzt werden.

7. Verfahren nach einem der Ansprüche 1 bis 6, **dadurch gekennzeichnet, dass** Schimmelpilze, Hefen und Bakterien einzeln eingesetzt werden.

8. Verfahren nach einem der Ansprüche 1 bis 7, **dadurch gekennzeichnet, dass** Schimmelpilze, Hefen und Bakterien in Kombination eingesetzt werden.

9. Verfahren nach einem der Ansprüche 1 bis 8, **dadurch gekennzeichnet, dass** Mischungen von Schimmelpilzen, Hefen bzw. Bakterien eingesetzt werden.

10. Verfahren nach einem der Ansprüche 1 bis 9, **dadurch gekennzeichnet, dass** der Gesamtprozess der mikrobiologischen Reaktion im Wesentlichen endergon abläuft.

11. Verfahren nach einem der Ansprüche 1 bis 10, **dadurch gekennzeichnet, dass** die Verfahrensschritte c) und d) in getrennten Reaktionsbehältern durchgeführt werden.

12. Verfahren nach einem der Ansprüche 1 bis 10, **dadurch gekennzeichnet, dass** die Verfahrensschritte c) und d) in einem einzigen Reaktionsbehälter durchgeführt werden.

13. Verfahren nach einem der Ansprüche 1 bis 12, **dadurch gekennzeichnet, dass** das Verfahren kontinuierlich oder diskontinuierlich durchgeführt wird.

## Claims

1. Multi-stage process for processing agricultural manure to produce biomass fertilizer, **characterized by** the following process steps:
a) Separation of the agricultural manure mixture by mechanical separation such as sieves (grids) or centrifugation of coarse foreign bodies such as straw from the essentially liquid phase or homogenization of the manure mixture by crushing straw and hay fibers
b) Addition of C-containing substances such as mono - di-, oligo-. Polysaccharides, pyruvic acids and glucono delta lactone and the like to the liquid phase or the homogenized liquid manure mixture,
c) Biogenic semi-aerobic fermentation without adding air or O2 for acidification by adding bacteria up to a pH of about 6.0-5.8
d) aerobic dissimilation and/or fermentation and further acidification down to a pH of about 4.8 with the addition of mould fungus and/or yeasts and/or bacteria with air or oxygen supply
wherein the inorganic ions present in the essentially liquid phase of the liquid manure or in the homogenized liquid manure mixture, more particularly ammonium ions, potassium ions and phosphate ions, are metabolized by the mould fungus and/or yeasts and/or bacteria in a microbiological reaction and converted into the resulting organic nitrogen compounds, such as amino acids, Oligopeptides, peptides, proteins, chitins, urea and phytin or other organic compounds are organically bound or stored.

2. Method according to claim 1, **characterized in that** the semi-aerobic acidification takes place at a temperature of 15 to 25 °C.

3. Method according to one of claims 1 or 2, **characterized in that** the aerobic dissimilation and/or fermentation takes place at a temperature of 15 to 25 °C.

4. Method according to any one of claims 1 to 3, **characterized in that** mould fungus of the genus Aspergillus, Penicillium, Trichoderma or Mucor and the like are used.

5. Method according to any one of claims 1 to 4, **characterized in that** wild yeasts from lactic acid biology or herbal mixtures from the earth material of different soil types and types of soil (forest soil, meadow, pasture) or solid manure or liquid manure are used as yeasts.

6. Method according to any one of claims 1 to 5, **characterized in that** bacterial strains that occur in the soil on rock surfaces, more particularly potassium bacteria or phosphorus bacteria, or Eschericha bacteria with the exception of the pathogenic Eschericha bacteria are used as bacteria.

7. Method according to any one of claims 1 to 6, **characterized in that** mould fungus, yeasts and bacteria are used individually.

8. Method according to any one of claims 1 to 7, **characterized in that** mould fungus, yeasts and bacteria are used in combination.

9. Method according to any one of claims 1 to 8, **characterized in that** mixtures of mould fungus, yeasts or bacteria are used.

10. Method according to any one of claims 1 to 9, **characterized in that** the overall process of the microbiological reaction runs essentially in an endergonic way.

11. Method according to any one of claims 1 to 10, **characterized in that** the process steps c) and d) are carried out in separate reaction vessels.

12. Method according to any one of claims 1 to 10, **characterized in that** the process steps c) and d) are carried out in a single reaction vessel.

13. Method according to any one of claims 1 to 12, **characterized in that** the method is carried out continuously or discontinuously.

## Revendications

1. Procédé multi-étapes de transformation de fumier agricole en engrais biomasse, **caractérisé par** les étapes de procédé suivantes:
a) Séparation du mélange de fumier agricole par séparation mécanique telle que des tamis (grilles) ou centrifugation des corps étrangers grossiers tels que la paille de la phase essentiellement liquide ou homogénéisation du mélange de fumier par broyage de la paille et des fibres de foin
b) Addition de substances contenant du carbone telles que mono - di-, oligo-. Polysaccharides, acides pyruviques et glucono delta lactone et similaires à la phase liquide ou au mélange de lisier homogénéisé,
c) Fermentation semi-aérobie biogénique sans ajout d'air ou d'O2 pour l'acidification en ajoutant des bactéries jusqu'à un pH d'environ 6,0-5,8
d) dissimilation aérobie et/ou fermentation et acidification supplémentaire jusqu'à un pH d'environ 4,8 avec addition de moisissures et/ou de levures et/ou de bactéries avec apport d'air ou d'oxygène
dans lequel les ions inorganiques présents dans la phase essentiellement liquide du lisier ou dans le mélange de lisier homogénéisé, en particulier les ions ammonium, les ions potassium et les ions phosphate, sont métabolisés par les moisissures et/ou les levures et/ou les bactéries dans une réaction microbiologique et convertis en les composés azotés organiques résultants, tels que les acides aminés, les oligopeptides, les peptides, les protéines, les chitines, l'urée et la phytine ou d'autres composés organiques sont liés ou stockés organiquement.

2. Procédé selon la revendication 1, **caractérisé en ce que** l'acidification semi-aérobie a lieu à une température de 15 à 25°C.

3. Procédé selon l'une des revendications 1 ou 2, **caractérisé en ce que** la dissimilation et/ou fermentation aérobie a lieu à une température de 15 à 25°C.

4. Procédé selon l'une quelconque des revendications 1 à 3, **caractérisé en ce que** l'on utilise des moisissures des genres Aspergillus, Penicillium, Trichoderma ou Mucor et analogues.

5. Procédé selon l'une quelconque des revendications 1 à 4, **caractérisé en ce qu'**on utilise des levures sauvages issues de la biologie lactique ou des mélanges d'herbes provenant du sol de différents types de sols et types de sol (sol forestier, prairie, pâturage) ou de fumier solide ou le fumier liquide est utilisé comme levure.

6. Procédé selon l'une quelconque des revendications 1 à 5, **caractérisé en ce que** l'on utilise des souches bactériennes présentes dans le sol sur les surfaces rocheuses, en particulier des bactéries potassium ou bactéries phosphorées, ou des bactéries Eschericha, à l'exception de la bactérie pathogène Eschericha. comme bactéries.

7. Procédé selon l'une quelconque des revendications 1 à 6, **caractérisé en ce que** les moisissures, levures et bactéries sont utilisées individuellement.

8. Procédé selon l'une quelconque des revendications 1 à 7, **caractérisé en ce que** les moisissures, levures et bactéries sont utilisées en combinaison.

9. Procédé selon l'une quelconque des revendications 1 à 8, **caractérisé en ce que** l'on utilise des mélanges de moisissures, levures ou bactéries.

10. Procédé selon l'une quelconque des revendications 1 à 9, **caractérisé en ce que** le processus global de la réaction microbiologique se déroule essentiellement en endergon.

11. Procédé selon l'une quelconque des revendications 1 à 10, **caractérisé en ce que** les étapes c) et d) du procédé sont réalisées dans des cuves réactionnelles séparées.

12. Procédé selon l'une quelconque des revendications 1 à 10, **caractérisé en ce que** les étapes c) et d) du procédé sont réalisées dans une même cuve réactionnelle.

13. Procédé selon l'une quelconque des revendications 1 à 12, **caractérisé en ce que** le procédé est réalisé en continu ou en discontinu.
